# EUROPÄISCHE PATENTSCHRIFT

(11) **EP 0 774 239 B1**
(45) Veröffentlichungstag und Bekanntmachung des Hinweises auf die Patenterteilung: **29.05.2002**
(21) Anmeldenummer: 96117180.8
(22) Anmeldetag: 25.10.1996
(51) Int. Cl.: A61C 19/00

(54) **Lichthärtgerät**
Light curing apparatus
Appareil émetteur de lumière destiné à la polymérisation

(30) Priorität: 17.11.1995 DE 19542985
(43) Veröffentlichungstag der Anmeldung: 21.05.1997
(73) Patentinhaber: Ivoclar Vivadent AG, 9494 Schaan (LI)
(72) Erfinder: Mertins, Jürgen, 9473 Gams (CH)
(74) Vertreter: Baronetzky, Klaus, Dipl.-Ing.

(56) Entgegenhaltungen:
- EP-A- 0 046 939
- EP-A- 0 128 324
- DE-A- 3 237 510
- DE-C- 3 820 413
- DE-U- 9 214 727

## Beschreibung

Die Erfindung betrifft ein Lichthärtgerät gemäß dem Oberbegriff von Anspruch 1, das insbesondere für die Aushärtung von unter Lichteinwirkung polymerisierbaren Dentalkunststoffen geeignet ist.

Ein derartiges Lichthärtgerät ist aus der DE-OS 32 37 510 bekannt. Bei einem derartigen Lichthärtgerät ist die Lichtquelle von einem Reflektor umgeben, der die austretende Lichtstrahlung auf eine Sammellinse fokussieren soll. Die plankonvexe Sammellinse, deren ebene Oberfläche der Lichtquelle zugewandt ist, soll dann die dort eintretenden Lichtstrahlen auf den Lichteintritt eines Lichtleiters fokussieren. Bei dem bekannten Lichthärtgerät sollen Spektrallampen als Lichtquellen verwendet werden, die recht groß und schwer sind, um die Einleitung von monochromatischer Lichtstrahlung in den Lichtleiter zu ermöglichen.

Um die Handhabbarkeit zu erleichtern, verfügt das bekannte Lichthärtgerät über einen flexiblen Lichtleiter mit einer Länge von 2 m. Bei dieser Konstruktion ist der Benutzer demnach durch die Verbindung über den Lichtleiter in seiner Bewegungsfreiheit eingeschränkt. Zudem ist ein vergleichsweise langer und flexibler Lichtleiter stets in der Gefahr, einmal abgeknickt zu werden. Auch wenn möglicherweise dann äußere Schäden nicht ersichtlich sind, vermindert sich die abgegebene Lichtleistung des Lichtleiters ganz erheblich, ohne daß dies von dem Bediener bemerkt wird.

Dies bedingt jedoch die erhebliche Gefahr, daß dann die Lichthärtung nicht vollständig durchgeführt wird, so daß die verwendete Dentalmasse nicht vorschriftsmäßig aushärtet.

Ein anderes Lichhärtgerät ist aus der EP 0 046 939 bekannt, bei dem die Lichtquelle von einem Reflektor umgeben ist, der die austretende Lichtstrahlung, die eine Filteranordnung durchläuft, auf den Lichteintritt eines Lichtleiters fokussiert. Diese Filteranordnung bei diesem bekannten Lichthärtgerät ermöglicht die Einleitung von monochromatischer Lichtstrahlung in den Lichtleiter.

Ferner sind an sich Handgeräte bekannt, beispielsweise aus der DE-OS 42 11 230. Bei derartigen Handgeräten werden üblicherweise vergleichsweise kompakte Anordnungen und Lichtquellen hoher Energiedichte verwendet, was häufig zu thermischen Problemen führt. Trotz des vergleichsweise hohen Energieaufwands ist die Lichtausbeute bei diesen Handgeräten verbesserungsfähig.

Demgegenüber liegt der Erfindung die Aufgabe zugrunde, ein Lichthärtgerät gemäß dem Oberbegriff von Anspruch 1 zu schaffen, das hinsichtlich der Lichtausbeute verbessert ist, leichter handhabbar ist und dennoch eine die vollständige Polymerisation sicherstellende Lichtausbeute auch über lange Zeit gewährleistet.

Diese Aufgabe wird erfindungsgemäß durch Anspruch 1 gelöst. Vorteilhafte Weiterbildungen ergeben sich aus den Unteransprüchen.

Überraschend läßt sich mit den erfindungsgemäßen Maßnahmen eine für die Lichthärtung besonders günstige Lichtausbeute trotz der Verwendung eines kompakten Handgeräts erzielen. Obwohl die kompakten Halogen-Universallampen verwendet werden, die zudem gegenüber Spektrallampen erheblich preisgünstiger sind, ist die Lichtausbeute überraschend gut und führt auch nicht zu einer unzulässigen Erwärmung im Mund des Patienten oder für die zu härtende Dentalmasse. Offenbar hat das auf die Sammellinse aufgedampfte Kantenfilter eine besonders gut reflektierende Wirkung für unerwünschte Strahlung, ohne daß die von der Halogenlampe abgegebene Lichtstrahlung nennenswert behindert würde. Das Kantenfilter hat eine besonders gute Durchlässigkeit in dem für die Polymerisation erwünschten Frequenzbereich. Vorteilhaft läßt sich mit einem Lichtleiter vergleichsweise großen Durchmessers arbeiten, wobei Gewichts- und Handhabungsprobleme von Lichtleitern grösseren Durchmessers weit geringer sind als bei dem bekannten Lichthärtgerät, nachdem sich der Lichtleiter nur über wenige Zentimeter und nicht etwa über 1 bis 2 m erstrecken muß.

Besonders vorteilhaft läßt sich das erfindungsgemäße Lichthärtgerät als Handgerät realisieren. Einzelne Vorteile ergeben sich jedoch auch bei Realisierung als Festgerät mit flexiblem Lichtleiter.

Die Gefahr der unbemerkten Verminderung der Austritts-Lichtleistung aufgrund eines Bruchs des Lichtleiters ist praktisch ausgeschlossen, denn der Lichtleiter kann gewünschtenfalls von einem Metallrohr ummantelt und insofern besonders gut geschützt sein, nachdem es nicht flexibel sein muß.

Gemäß einer bevorzugten Ausgestaltung ist es vorgesehen, das Kantenfilter auf einer konvexen Oberfläche der Sammellinse aufzubringen. Soweit die zum Kantenfilter gelangende Wärmestrahlung reflektiert wird, divergiert die Wärmestrahlung, was für die Wärmeableitung besonders günstig ist.

Eine besonders vorteilhafte Ausgestaltung des erfindungsgemäßen Lichthärtgeräts weist einen Reflektor auf, der sich an die Sammellinse und/oder das Kantenfilter anschließt, wobei der Reflektorkonus sich zwischen der Lichtquelle und dem Kantenfilter und/oder der Sammellinse erstreckt und der Konuswinkel sich zur Lichtquelle hin öffnet. Dieser Reflektor erhöht die Lichtleistung, nachdem in der Lichtquelle abgegebene Strahlung reflektiert und der Sammellinse zugeleitet wird und verbessert in einer Doppelfunktion zugleich die Wärmeableitung von dem Kantenfilter, insbesondere, wenn die konische Reflektorhülse eine metallische Reflexionsschicht aufweist.

Gemäß einer weiteren bevorzugten Ausgestaltung ist die Sammellinse als Plankonvexlinse ausgebildet, deren konvexe Oberfläche insbesondere der Lichtquelle zugewandt ist. Diese Ausgestaltung ist besonders günstig, was die Montage und die Lichteinleitung in den Lichtleiter angeht. Von dem Lichteintritt reflektierte Lichtstrahlen werden an der planen Oberfläche der Sammellinse umgehend zurückreflektiert, so daß sie erneut die Gelegenheit erhalten, in den Lichtleiter einzutreten.

Wenn die Sammellinse aus Wärmeabsorptionsglas ausgebildet ist, wird durchtretende Infrarotstrahlung zum großen Teil absorbiert und wirkt temperaturerhöhend. In diesem Zusammenhang ist es dann besonders günstig, wenn die Sammellinse von dem Lichtleiter beabstandet ist, so daß nicht die Gefahr besteht, daß der Lichtleiter unzulässig erwärmt wird. Die Absorptionseigenschaften dienen zudem der Vernichtung von Restwärme, wobei es sich versteht, daß es bei dieser Ausgestaltung günstig sein kann, das Kantenfilter auf der im Lichtleiter zugewandten Oberfläche anzubringen, um die Emission von Wärmestrahlung zum Lichtleiter hin zu verhindern.

Es versteht sich, daß bei Bedarf auch auf beiden Seiten der Sammellinse Kantenfilter aufgedampft sein können.

Auch wenn grundsätzlich andere Arten der Aufbringung von Kantenfilter möglich sind, ist es bevorzugt, das Kantenfilter aufzudampfen. Hierdurch läßt sich eine gleichmäßige und geringe Schichtdicke mit optimal geringer Durchlaßdämpfung im Durchlaßbereich des Filters erzielen.

Es versteht sich, daß bei Bedarf die Sammellinse um weitere Linsen erweitert sein kann, um die optische Güte zu verbessern.

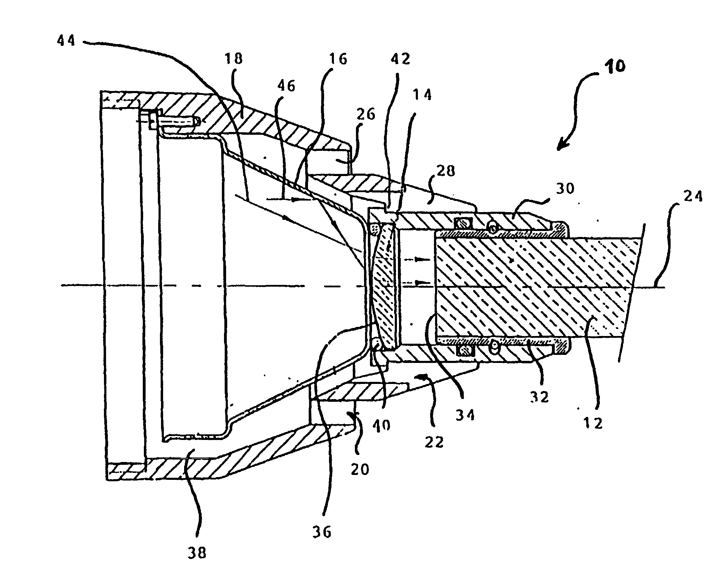

Weitere Vorteile, Einzelheiten und Merkmale ergeben sich aus der nachfolgenden Beschreibung eines Ausführungsbeispiels anhand der Zeichnung.

Es zeigt:

Die einzige Figur einen Schnitt durch einen Teil eines erfindungsgemäßen Lichthärtgeräts, unter Darstellung des Lichtleiters und der Sammellinse.

Wie aus der Darstellung gemäß der einzigen Figur ersichtlich ist, weist ein erfindungsgemäßes Lichthärtgerät 10 einen Lichtleiter 12, eine Sammellinse 14 und einen Reflektor 16 auf, die in einem gemeinsamen Gehäuse 18 gelagert sind. Das Gehäuse 18 stützt ferner eine nicht dargestellte Lichtquelle ab, die gegebenenfalls mit einem an sich bekannten Reflektor versehen ist und in der Zeichnung weiter links angeordnet ist. Der Lichtleiter 12 ist in der Zeichnung lediglich zum Teil dargestellt und erstreckt sich mit einer gegebenenfalls leicht abgebogenen Spitze über mehrere Zentimeter, um einen leichten Zugang zu allen erforderlichen Bereichen im Mund eines Patienten zu ermöglichen.

Das Lichthärtgerät ist als Handgerät ausgebildet und weist hierzu einen Aufbau auf, wie er beispielsweise aus der DE-OS-42 11 230, auf die insofern vollinhaltlich Bezug genommen wird, an sich bekannt ist. Das Gehäuse 18 weist eine Mehrzahl von Belüftungsöffnungen 20, 22 auf, die sich im wesentlichen ringförmig koaxial zur optischen Achse 24 erstrecken, je von Rippen 26, 28 unterbrochen, die um den Umfang gleichmäßig verteilt sind.

Das Gehäuse ist in an sich bekannter Weise mit einem Lüfter ausgestattet, der hinter der Lampe angeordnet ist und so betrieben wird, daß die Belüftungsöffnungen 20, 22 als Lufteintrittsöffnung wirken. Recht kalte Luft streicht dementsprechend an dem die Sammellinse 14 und den Reflektor 16 umgebenden Bereich entlang und bringt dort vergleichsweise gute kühle Wirkung. Die Sammellinse 14 ist in dem Gehäuse über eine separate Haltehülse 30 gelagert, die auch den Lichtleiter 12 trägt. Der Lichtleiter 12 ist in der Haltehülse 30 über eine Fassung 32 abgestützt. Die Anordnung von Sammellinse 14 und Lichtleiter 12 in der Haltehülse 30 ist so gewählt, daß ein Lichteintritt 34 des Lichtleiters 12 von der Sammellinse 14 deutlich beabstandet ist. Bei dem dargestellten Ausführungsbeispiel ist der Abstand größer als die maximale Stärke der Sammellinse 14. Der Brennpunkt der Sammellinse 14 liegt etwas hinter dem Lichteintritt 34.

Die Sammellinse 14 ist als Plankonvexlinse ausgebildet, wobei die ebene Oberfläche dem Lichtleiter 14 und die konvexe Oberfläche der Lichtquelle zugewandt ist. Auf der der Lichtquelle zugewandten Seite ist sie mit einem Kantenfilter 36 bedampft. Zudem ist sie aus einem Wärmeabsorptionsglas ausgebildet, das Infrarotstrahlung weitgehend absorbiert. Durch diese Anordnung wird erreicht, daß trotz der unmittelbaren Nähe zum Lichtleiter 12 in den Lichtleiter 12 praktisch nur Licht mit dem erwünschten Wellenlängenbereich eintritt. Beispielsweise kann das Kantenfilter auch so ausgestattet sein, daß unerwünschte UV-Strahlung ausgefiltert wird. Die ballige Ausgestaltung des Kantenfilters 36 führt auch dazu, daß die nicht durchgelassene Strahlung großflächig und verteilt reflektiert wird. Sie trifft dann auf den Reflektor 16, der sich im unmittelbaren Luftstrom an dem Strömungskanal 38 befindet und gut gekühlt wird. Darüberhinaus ist das Kantenfilter 36 und damit die Sammellinse 14 auch in thermische Nähe zu dem Reflektor 16 ausgebildet, und über die Belüftungsöffnung 22 wird ein zusätzlicher, hier unmittelbar benachbarter Strömungskanal eröffnet, der zur guten Kühlung beiträgt.

Die Abstützung der Linse 14 erfolgt so, daß sie über einen Haltering 40, der gegebenenfalls elastisch ist, zwischen der Haltehülse 30 und dem Reflektor 16 eingespannt ist. Der Reflektor 16 ist von innen an dem Gehäuse 18 festgeschraubt, so daß die Verschraubung nacheinander die Haltehülse 30, die Sammellinse 14, den Haltering 40 und den Reflektor 16 an einem entsprechenden Halteflansch 42 des Gehäuses abstützt.

Wie aus der Figur ersichtlich ist, wird die von der Lichtquelle emmittierte Lichtstrahlung teils unmittelbar entsprechend dem Verlauf des Lichtstrahls 44 gebrochen und tritt dann parallel zur optischen Achse 24 in den Lichtleiter 12 ein. Teils wird sie an dem Reflektor 16 reflektiert, wie es bei dem Lichtstrahl 46 dargestellt ist, und tritt dann nach entsprechender Brechung in die Sammellinse 14 ein, um parallel zur optischen Achse 24 wieder aus ihr auszutreten. Dies gilt selbstverständlich nur für Lichtstrahlen mit Wellenlängen, die von dem Kantenfilter 36 durchgelassen werden.

Im Beispielsfall ist der Reflektor 16 als Metallteil ausgebildet und weist daher gute Wärmeleiteigenschaften auf. Es versteht sich jedoch, daß anstelle dessen ein innenverspiegeltes Kunststoffteil verwendbar ist, wobei es jedenfalls günstig ist, daß sich der Reflektor zur Lichtquelle hin konusförmig erweitert.

Anstelle der Sammellinse 14 kann auch eine anders gestaltete Sammellinse oder ein entsprechendes Linsensystem verwendet werden. Die Sammellinse ist in geeigneter Weise mit einem Kantenfilter versehen, das verhindert, daß Licht oder elektromagnetische Strahlung mit unerwünschter Wellenlänge in den Lichtleiter 12 eintritt.

## Patentansprüche

1. Lichthärtgerät, insbesondere für durch Bestrahlung aushärtbare Dentalmassen, mit einer Lichtquelle und einer Lichtleitvorrichtung, wie einem Lichtleiter, der einen Lichteintritt aufweist, wobei im Strahlengang zwischen Lichtquelle und Lichteintritt eine Sammellinse angeordnet ist, wobei das Lichtgerät (10) insbesondere als Handgerät ausgebildet ist, **dadurch gekennzeichnet, daß** ein Kantenfilter auf der Oberfläche der Sammellinse (14) aufgebracht ist.

2. Lichthärtgerät nach Anspruch 1, **dadurch gekennzeichnet, daß** die Sammellinse (14) mit dem Kantenfilter (36) bedampft ist.

3. Lichthärtgerät nach Anspruch 1 oder 2, **dadurch gekennzeichnet, daß** die Sammellinse (14) als Plankonvexlinse ausgebildet ist, deren konvexe Oberfläche der Lichtquelle zugewandt ist.

4. Lichthärtgerät nach einem der vorhergehenden Ansprüche, **dadurch gekennzeichnet, daß** die Sammellinse (14) das Kantenfilter (36) auf ihrer der Lichtquelle zugewandten Oberfläche aufweist.

5. Lichthärtgerät nach einem der vorhergehenden Ansprüche, **dadurch gekennzeichnet, daß** anschließend an das Kantenfilter (36) ein innenverspiegelter Reflektor (16) angeordnet ist, der sich zur Lichtquelle hin insbesondere konusförmig erweitert.

6. Lichthärtgerät nach einem der vorhergehenden Ansprüche, **dadurch gekennzeichnet, daß** die Sammellinse (14) aus einem Wärmeabsorptionsglas besteht.

7. Lichthärtgerät nach einem der vorhergehenden Ansprüche, **dadurch gekennzeichnet, daß** die Sammellinse (14) von der Lichtleitvorrichtung (12) beabstandet ist und der Brennpunkt der Sammellinse (14) mit dem Lichteintritt (34) zusammenfällt oder sich in der Lichtleitvorrichtung (12) befindet.

8. Lichthärtgerät nach einem der vorhergehenden Ansprüche, **dadurch gekennzeichnet, daß** als Lichtquelle eine kompaktbauende Lampe hoher Lichtenergieausbeute im Verhältnis zur Größe und zur eingebrachten elektrischen Energie eingesetzt ist, insbesondere eine Halogen-Reflektorlampe.

9. Lichthärtgerät nach einem der vorhergehenden Ansprüche, **dadurch gekennzeichnet, daß** die Sammellinse (14) Teil eines Linsensystems ist, das insbesondere auch eine konkav-konvexe Linse oder eine bikonvexe Linse aufweist.

10. Lichthärtgerät nach einem der vorhergehenden Ansprüche, **dadurch gekennzeichnet, daß** das Kantenfilter (36) Licht unterhalb einer bestimmten Wellenlänge durchläßt und insbesondere Licht im Infrarotbereich sperrt.

11. Lichthärtgerät nach einem der vorhergehenden Ansprüche, **dadurch gekennzeichnet, daß** das Kantenfilter (36) Reflexionseigenschaften für gesperrte Strahlung aufweist.

## Claims

1. Light curing apparatus, in particular for dental materials which can be cured by irradiation, with a light source and a light guide device, such as an optical waveguide, which comprises a light entrance, wherein a convergent lens is disposed in the path of rays between the light source and the light entrance, wherein the light apparatus (10) is in particular formed as a hand-held apparatus, **characterised in that** a cut-off filter is applied to the surface of the convergent lens (14).

2. Light curing apparatus according to Claim 1, **characterised in that** the cut-off filter (36) is vapour-deposited on the convergent lens (14).

3. Light curing apparatus according to Claim 1 or 2, **characterised in that** the convergent lens (14) is formed as a plano-convex lens, the convex surface of which faces the light source.

4. Light curing apparatus according to any one of the preceding Claims, **characterised in that** the convergent lens (14) comprises the cut-off filter (36) on its surface which faces the light source.

5. Light curing apparatus according to any one of the preceding Claims, **characterised in that** an internally silvered reflector (16) is disposed adjacent to the cut-off filter (36), which reflector widens, in particular conically, towards the light source.

6. Light-curing apparatus according to any one of the preceding Claims, **characterised in that** the convergent lens (14) consists of a heat absorption glass.

7. Light curing apparatus according to any one of the preceding Claims, **characterised in that** the convergent lens (14) is disposed at a spacing from the light guide device (12), and the focal point of the convergent lens (14) coincides with the light entrance (34) or is located in the light guide apparatus (12).

8. Light curing apparatus according to any one of the preceding Claims, **characterised in that** the light source which is used is a structurally compact lamp of a high light energy yield in relation to the size and to the electrical energy which is introduced, in particular a halogen reflector lamp.

9. Light curing apparatus according to any one of the preceding Claims, **characterised in that** the convergent lens (14) is part of a lens system which also comprises in particular a concave-convex lens or a biconvex lens.

10. Light curing apparatus according to any one of the preceding Claims, **characterised in that** the cut-off filter (36) transmits light below a certain wavelength and in particular blocks light in the infrared range.

11. Light curing apparatus according to any one of the preceding Claims, **characterised in that** the cut-off filter (36) has reflection properties for blocked radiation.

## Revendications

1. Appareil émetteur de lumière destiné à la polymérisation, en particulier pour des matériaux dentaires durcissables par exposition à la lumière, avec une source lumineuse et un dispositif de guidage de lumière, comme un conducteur optique, qui présente une entrée de lumière, une lentille de convergence étant disposée dans la trajectoire des rayons lumineux entre la source lumineuse et l'entrée de lumière, l'appareil émetteur de lumière (10) étant développé en particulier sous forme d'un appareil portatif, **caractérisé en ce qu'**un filtre à arêtes est appliqué sur la surface supérieure de la lentille de convergence (14).

2. Appareil émetteur de lumière de polymérisation selon la revendication 1, **caractérisé en ce que** la lentille de convergence (14) est vaporisée avec le filtre à arêtes (36).

3. Appareil émetteur de lumière de polymérisation selon la revendication 1 ou 2, **caractérisé en ce que** la lentille de convergence (14) est développée sous forme d'une lentille plan-convexe dont la surface supérieure convexe est orientée vers de la source lumineuse.

4. Appareil émetteur de lumière de polymérisation selon une des revendications précédentes, **caractérisé en ce que** la lentille de convergence (14) présente le filtre à arêtes (36) sur sa surface supérieure orientée vers la source lumineuse.

5. Appareil émetteur de lumière de polymérisation selon une des revendications précédentes, **caractérisé en ce que**, faisant suite au filtre à arêtes (36) est disposé un réflecteur dont la face interne est métallisée (16) et qui s'élargit en forme de cône en particulier vers la source lumineuse.

6. Appareil émetteur de lumière de polymérisation selon une des revendications précédentes, **caractérisé en ce que** la lentille de convergence (14) se compose d'un verre absorbant la chaleur.

7. Appareil émetteur de lumière de polymérisation selon une des revendications précédentes, **caractérisé en ce que** la lentille de convergence (14) est placée à distance du dispositif de guidage de lumière (12) et que le foyer de la lentille de convergence (14) coïncide avec l'entrée de lumière (34) ou se trouve dans le dispositif de guidage de lumière (12).

8. Appareil émetteur de lumière de polymérisation selon une des revendications précédentes **caractérisé en ce que** la source lumineuse mise en oeuvre est une lampe de forme compacte avec un rendement d'énergie lumineuse élevé par rapport à sa taille et à l'énergie électrique fournie, en particulier une lampe halogène à réflecteur.

9. Appareil émetteur de lumière de polymérisation selon une des revendications précédentes, **caractérisé en ce que** la lentille de convergence (14) est une partie d'un système de lentilles qui présente en particulier également une lentille concave-convexe ou une lentille biconvexe.

10. Appareil émetteur de lumière de polymérisation selon une des revendications précédentes, **caractérisé en ce que** le filtre à arêtes (36) laisse passer la lumière en dessous d'une certaine longueur d'onde et bloque en particulier la lumière dans le domaine des rayons infrarouges.

11. Appareil émetteur de lumière de polymérisation selon une des revendications précédentes, **caractérisé en ce que** le filtre à arêtes (36) présente des propriétés de réflexion pour le rayonnement bloqué.
